(19) Europäisches Patentamt
European Patent Office
Office européen des brevets

(11) **EP 1 759 994 A2**

(12) **EUROPEAN PATENT APPLICATION**

(43) Date of publication:
**07.03.2007 Bulletin 2007/10**

(51) Int Cl.:
***B64D 39/00*** *(2006.01)* ***F41J 9/08*** *(2006.01)*

(21) Application number: **06254614.8**

(22) Date of filing: **05.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.09.2005 IL 17067005**

(71) Applicant: **ISRAEL AIRCRAFT INDUSTRIES LTD. Lod 70100 (IL)**

(72) Inventor: **Plotkin, Eitan Tel-Aviv 67451 (IL)**

(74) Representative: **Smith, Samuel Leonard J.A. Kemp & Co., 14 South Square, Gray's Inn London WC1R 5JJ (GB)**

(54) **Drogue, particularly for an in-flight refuelling system**

(57) A drogue is provided having a projected area associated with an aerodynamic drag-generating arrangement of the drogue. The drag generated by the drogue is a function of the projected area (A,A1,A2), and the drogue has a mechanism for controlling the drag generated by the drogue with respect to changes in airflow dynamic pressure by adjusting said projected area. The mechanism comprises control members (170) for driving said adjustment, the control members being configured for providing a driving force ($F_C$) for driving said adjustment that is generated by and related to the airflow dynamic pressure (7). An in-flight refueling system having such a drogue, and a method for operating a drogue are also provided.

FIG. 1

## Description

This invention relates to aeronautical drogues, particularly to applications in which such drogues are adapted for use with in-flight refueling systems.

Aerodynamic drogues are well known devices and have many uses. In one particular application, targets in the form of aerodynamic drogues are towed behind an aircraft for air-to-air firing practice. In another application, aerodynamic drogues form an essential part of in-flight refueling systems, providing stability and tension to a refueling hose. Essentially, a drogue coupled to a refueling coupling provides drag to deploy the hose and interact with the hose reel response system, and further provides stability and drag to the coupling in order to resist the forward movement of a probe from a refueling aircraft, enabling engagement between the probe and the coupling. The drag generated by the drogue induces mechanical forces on the fuel hose, and thus must be kept within pre-established limits. The drag generated by the drogue depends on the air speed and altitude of the tanker, the effective area of the drogue, and the coefficient of drag thereof.

Traditionally, drogues used for in-flight refueling systems have been of substantially fixed geometry when deployed, and therefore provide a drag force that increases with the square of the air speed of the aircraft. Accordingly, when desiring to use the tanker for refueling a variety of aircraft having significantly different cruising speeds one from the other, for example transport helicopters and fixed wing attack aircraft, it has been necessary to fit different drogues, a low drag drogue for use with high speed, high altitude aircraft, and a high drag drogue for use with low speed, low altitude aircraft. Such an arrangement involves time and personnel costs associated with manually replacing the drogue, and limits the flexibility of operation of the tanker, particularly once airborne.

While similar situations arise in other applications where drogues are required to operate at a range of airspeeds and altitudes, such drogues are in general of a fixed geometry when deployed, and thus generate a drag that varies with airflow dynamic pressure.

US 6,824,105 discloses a drogue comprising a canopy supported by a plurality of adjustable ribs and further ribs. A control unit is provided for moving the adjustable ribs into a first position, in which an air stream can inflate the canopy whereby drag on the canopy causes the drogue to draw a fuel hose from a tanker aircraft into an extended position, and into a second position in which the canopy takes on a cylindrical form and drag thereon in the extended position will be reduced. Selected adjustable supports are movable relative to the others by a control mechanism to adjust a selected portion of the canopy whereby the drag on that portion will be increased and the drogue will move to a new position.

US 6,464,173 discloses a paradrogue formed from a canopy supported on a plurality of spaced apart struts running completely around the canopy. The remote ends of the struts have clip members which are attached to the bottom of the canopy. Separate nylon cords are used to interconnect adjoining struts by means of brackets which are fitted through loops at the end of the cords. The base end of the canopy is attached to a base support member by means of hooks formed on the bottom ends of the struts which engage a ring on the base support member.

US 6,375,123 discloses a refueling drogue for rearward deployment from a tanker aircraft into an air stream, and includes a fuel valve for receiving fuel from the tanker aircraft and controlling a flow of the fuel; a coupling attached to the fuel valve for receiving fuel from the fuel valve; and a plurality of struts, each strut having a proximal end and a distal end wherein each strut is rotatably connected to the coupling at the proximal end and each strut includes a winglet at the distal end.

US 5,921,294 discloses an apparatus attached to a fuel hose and deployed rearwardly of a tanker craft, the apparatus for inflight refueling of an aircraft and includes a fuel valve for controlling the flow of fuel through the valve, a coupler attached to the fuel valve for receiving and locking onto the probe of a receiving aircraft and for conveying fuel through the coupler and to the probe of the receiving aircraft, and a plurality of struts attached to the coupler, the struts configured and arranged to compress inwardly when acted upon by sufficient compressive forces and to expand outwardly against aerodynamic forces when located in the airstream, the struts forming a bell shaped target for guiding the probe of the receiving aircraft into the coupler.

US 6,145,788 discloses a drogue assembly for in flight refueling that includes a circumferential array of triangular support arms which carry a drogue parachute which extends circumferentially around their shorter sides. Each support arm is pivoted and mounted on a pivot pin at its apex for pivotal movement in a radial direction. At least alternate ones of the support arms carry leaf springs which extend into pockets formed in the drogue parachute. The leaf springs act on the drogue parachute in opposition to air pressure loading on it in flight so that it tends to increase the chord angle of the drogue parachute from the leading edge.

US 5,871,173 discloses a drag-producing aerodynamic device in which the cross-sectional area of the structure producing drag is variable.

US 5,255,877 discloses a variable speed drogue for use with an in-flight aerial refueling system that includes a refueling coupling for receiving a refueling probe. A plurality of trailing edge support arms are pivotally mounted to the trailing edge portion of the refueling coupling, projecting rearwardly, a plurality of pivot linkage members are pivotally connected to the trailing edge portion of the refueling coupling, and a plurality of leading edge support arms are pivotally connected to the pivot linkages. A mechanism is also provided for uniformly and symmetrically longitudinally changing the pivot points of the leading edge support arms to change the projected area of the drogue canopy.

US 5,427,333 a variable speed drogue for use with an in-flight aerial refueling system includes a refueling coupling for receiving a refueling probe. A plurality of trailing edge support arms are pivotally mounted to the trailing edge portion of the refueling coupling, projecting rearwardly, and a plurality of leading edge support arms are pivotally connected to the refueling coupling forward and outward of the trailing edge support arms. A drogue canopy is connected between the trailing ends of the leading and trailing edge support arms, presenting a projected area, to provide drag. A plurality of cord linkages are secured at one end to the leading edge of the drogue canopy, and are connected at their other end to a rear cord ring mounted to the trailing edge portion of the refueling coupling member. A mechanism is provided for uniformly and symmetrically extending and retracting the cord linkages longitudinally with respect to the refueling coupling member to uniformly and symmetrically change the projected area of the drogue canopy.

US 6,588,465 discloses a aerial refueling drogue utilizes a bleeding drogue canopy for providing substantially constant loads over a range of refueling speeds, by passive movement of the bleeding drogue between a retracted position and extended position. The passive variable speed drogue comprises leading edge support arms, center support arms, and trailing edge support arms mounted to a refueling coupling member, with a forward drogue canopy attached between the leading edge support arms and the center support arms. An aft bleeding drogue canopy is connected between the center support arms and the trailing edge support arms. Springs in the trailing edge support arms bias the bleeding drogue canopy to a retracted position. In an alternate embodiment, cords are attached to the trailing edge of the aft bleeding drogue canopy, continue through the trailing edge support arms, up each center support arm, and through rings attached to the inside of the aft bleeding drogue canopy. The other ends of the cords are also attached to the trailing edge of the aft bleeding drogue canopy.

US 4,927,099 discloses an aeronautical drogue having a canopy and support members connecting the canopy to a connector for providing essentially constant drag at variable speeds by aerodynamic pressure modulation through controllably venting the canopy by constructing the canopy of a plurality of separate elastic bands positioned side by side the elastic bands being connected at spaced intervals by flexible connections.

The present invention relates to a variable speed drogue, that is, a drogue that may be used within a range of operating airspeeds and altitudes, and is thus suitable for applications in which it is desired that a drogue generate a controllable drag within predetermined limits, typically approximately constant, for a range of flight speeds or airspeeds and altitudes. Thus, such a drogue can operate in the manner of the invention at heights ranging from sea-level to any desired height, for example 15,000ft to about 40,000ft, and at any desired speed, for example at 100 knots to between about 200 to 350 knots, wherein changes in the airflow dynamic pressure are to a great extent or substantially fully compensated to provide the desired drag within the required drag envelope.

According to the invention, the drogue comprises an aerodynamic drag-generating arrangement having a projected area associated therewith, wherein a drag generated by said drogue is a function of said projected area, and means, for example a mechanism, for controlling the drag generated by the drogue with respect to changes in airflow dynamic pressure by adjusting said projected area, wherein said means comprise control members for driving said adjustment, said control members being configured for providing a driving force for driving said adjustment that is generated by and related to or is a function of the airflow dynamic pressure.

Typically, the drogue may comprise the following elements:

a central support structure configured for connection to an external structure and having a leading edge portion and a trailing edge portion;

a plurality of leading edge support members, each having a leading part and a trailing part, said leading part being mounted to said leading edge portion of the central support structure to enable at least said trailing part of said leading edge support members to move with respect to said central support member at least between a first position and a second position;

an aerodynamic drag-generating arrangement connected at least to said trailing part of said leading edge support members, said aerodynamic drag-generating arrangement comprising an associated projected area that is adjustable by movement of said trailing part of said leading edge members between said first and second positions, wherein a drag generated by said aerodynamic drag-generating arrangement is a function of a position of said trailing part of said leading edge support members with respect to said central support structure; and

control members for adjusting said projected area, said control members comprising an aerodynamic surface arrangement connected to said leading edge members and configured for generating an airflow dynamic pressure-related force transmittable to said leading edge support members to effect movement of at least said trailing part of said leading edge support members with respect to said central support structure to a position between said first and second positions in response to a change of airflow dynamic pressure with respect to said drogue such as to enable said aerodynamic drag-generating arrangement to generate a corresponding drag force for the drogue.

The control members may be configured to generate a said airflow dynamic pressure related force to said leading edge members at any airflow dynamic pressure between a range of operating airflow dynamic pressures such as to generate a said corresponding drag force that is below an upper predetermined threshold value. The upper predetermined threshold value may be any one of about 0%, 5%, 10%, 15%, 20%, 25%, 30%, 35%, 40%, 50%, 60%, 70%, 80%, 90%, 100% -or any percentage inbetween these values - above a nominal drag value.

Additionally or alternatively, the control members may be configured to generate a said airflow dynamic pressure related force to said leading edge members at any airflow dynamic pressure between a range of operating airflow dynamic pressures such as to generate a said corresponding drag force that is above a lower predetermined threshold value. The lower predetermined threshold value may be any one of about 0%, 5%, 10%, 15%, 20%, 25%, 30%, 35%, 40%, 50%, or greater than 50% - or any percentage inbetween these values - or below a nominal drag value.

Typically, the control members are configured to generate a said airflow dynamic pressure related force to said leading edge members at any airflow dynamic pressure between a range of operating airflow dynamic pressures such as to maintain approximately constant a drag force generated by said drogue.

The trailing part of the leading edge support members may be displaced radially with respect to said central support structure when moving between said first position and said second position. In one embodiment, the leading edge support members are pivotably connected to said central support member via said leading parts. Optionally, the leading edge support members are articulated, and comprise a pivot intermediate between said leading part and said trailing part, wherein said control members are mounted on said trailing part. In another embodiment, the leading edge support members are slidingly connected to said central support member via said leading parts for axial translation between said leading parts and central support member.

Optionally, the trailing edge portion of said central support structure comprises a plurality of trailing edge support members pivotably mounted to an intermediate portion of the central support structure. Alternatively, the trailing edge portion of said central support structure comprises a frustoconical structure.

Optionally, the aerodynamic drag-generating arrangement comprises a drogue canopy mounted between said trailing parts of said leading edge support members and said trailing edge portion of said central support structure. Alternatively, the aerodynamic drag-generating arrangement may comprise a plurality of drag inducing elements, including winglets, for example.

The control members may comprise a second drogue canopy, or aerodynamic lifting surfaces such as aerofoils, for example.

The drag-generating arrangement is typically connected via an inner perimeter thereof to the trailing portion of said central support structure.

In one application, the drogue is configured as a refueling drogue for rearward deployment from a tanker aircraft into an air stream. In such an application, the drogue may further comprise:

a fuel valve for receiving fuel from the tanker aircraft and for controlling a flow of the fuel;
a coupling attached to the fuel valve for enabling a refueling probe from a receiving aircraft to reversibly connect to the fuel valve such as to enable fuel to be conveyed to said probe.

The present invention also relates to a method for operating a drogue comprising controlling the drag generated by the drogue with respect to changes in airflow dynamic pressure by adjusting a projected area associated with an aerodynamic drag-generating arrangement of the drogue, wherein the drag generated by said drogue is a function of said projected area, and wherein said adjustment is driven by control members configured for providing a driving force for driving said adjustment that is generated by and related to the airflow dynamic pressure acting on the drogue.

According to the method, said airflow dynamic pressure-related driving force may be such as to adjust the said projected area to generate a drag that is approximately constant for an operating range of airflow dynamic pressures.

Optionally, an airflow dynamic pressure related force may be generated at any airflow dynamic pressure between a range of operating airflow dynamic pressures such as to generate a said corresponding drag force that is below an upper predetermined threshold value. The upper predetermined threshold value may be any one of about 0%, 5%, 10%, 15%, 20%, 25%, 30%, 35%, 40%, 50%, 60%, 70%, 80%, 90%, 100% -or any percentage inbetween these values - above a nominal drag value.

Further optionally, an airflow dynamic pressure related force may be generated at any airflow dynamic pressure between a range of operating airflow dynamic pressures such as to generate a said corresponding drag force that is above a lower predetermined threshold value. The lower predetermined threshold value may be any one of about 0%, 5%, 10%, 15%, 20%, 25%, 30%, 35%, 40%, 50%, or greater than 50% - or any percentage inbetween these values - or below a nominal drag value.

The present invention also relates to an in flight refueling system comprising:

a fuel supply;
a fuel line having a leading end and a trailing end, and being in fluid communication with the fuel supply;
a refueling coupling means for receiving a refueling probe and mounted at the trailing end of the fuel line; and

a drogue as defined herein and mounted at said trailing end.

In order to understand the invention and to see how it may be carried out in practice, a preferred embodiment will now be described, by way of non-limiting example only, with reference to the accompanying drawings, in which:

Fig. 1 schematically illustrates in partial side view a first embodiment of the present invention in high speed mode, low speed mode and stowed positions.
Fig. 2 schematically illustrates in partial side view a variation of the first embodiment of the present invention in high speed mode, low speed mode and stowed positions.
Figs. 3(a) to 3(c) schematically illustrates in isometric view the embodiment of Fig. 2 in high speed mode, low speed mode and stowed positions, respectively.
Fig. 4 schematically illustrates in partial side view another variation of the first embodiment of the present invention in high speed mode, low speed mode and stowed positions.
Fig. 5 schematically illustrates a control force vs airflow dynamic pressure relationships, showing exemplary operating drag regimes for a drogue according to the invention.
Fig. 6 schematically illustrates in partial side view a second embodiment of the present invention in high speed mode, low speed mode and stowed positions.

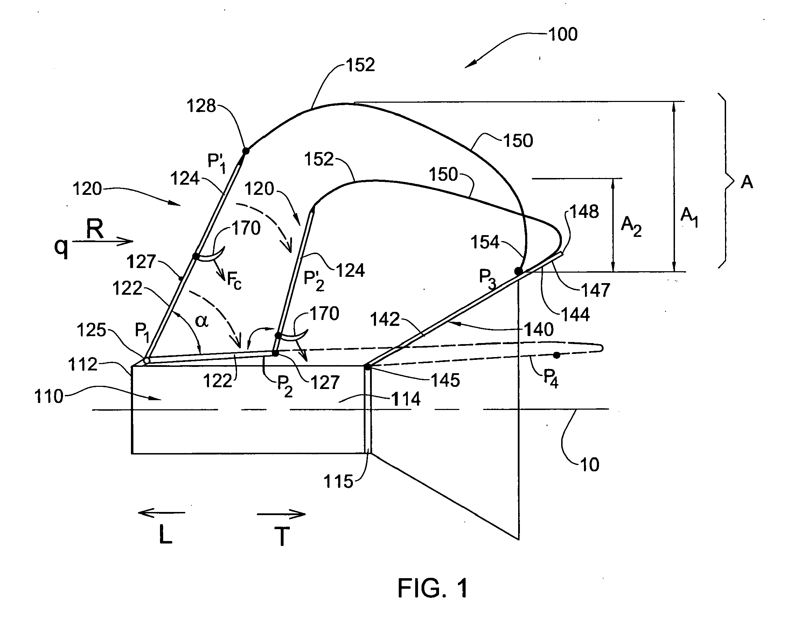

Fig. 1 illustrates a first embodiment of the present invention, particularly adaptable for an in-flight refueling system, as will be disclosed further herein, though alternatively having any other application in which it is desired to generate a drag within present limits for a wide range of airspeeds/altitudes.

In the first embodiment, the drogue, generally designated with the numeral 100, comprises a central support structure, typically in the form of a cylinder 110, having a leading edge portion 112 and a trailing edge portion 114 with respect to the general airflow direction R. A plurality of leading edge support members 120 (only one such member 120 being shown in the figure, at three different positions), each having a leading part 122 and a trailing part 124, are movably mounted to the leading edge portion 112, and the leading edge support members 120 are arranged circumferentially around the leading edge portion 112, typically disposed uniformly thereon, and extend therefrom in a generally radial direction. In particular the leading part 122 is pivotally mounted to the leading edge portion 112 by means of a pivot arrangement 125 that enables said leading edge support members 120 to move -in this embodiment, to rotate along a radial plane- with respect to said central support member 110 at least between a first, relatively forward position P1 at angle to the axis 10, and a second, relatively rearward position P2 at a smaller angle to the axis 10, with a rotation $\alpha$ between the two positions. Further rotational movement of the leading edge support members 120 can be limited by extension limiting means, such as for example circumferentially arranged cables (not shown) connecting adjacent leading edge support members 120 to each other at intermediate points along the length of the members. Accordingly, a trailing edge 128 of each of the leading edge support members 120 is displaced radially with respect to the longitudinal axis 10 of the drogue 100 as the leading edge support members are moved. Furthermore, each leading edge support member 120 is articulated, comprising another pivot arrangement 127 rotatably connecting the leading part 122 to the trailing part 124, and which allows relative rotational movement therebetween along a radial plane with respect to the central support structure 110 defined by the position of the corresponding pivot arrangement 125. Optionally, relative movement between the leading part 122 and the trailing part 124 about pivot arrangement 127 may be unrestricted and independent of the rotation of the leading part 122 about the first pivot arrangement 125. Alternatively, the trailing part 124 may be constrained to rotate between two angular limits with respect to the leading part 122, and/or, the rotation of the trailing part 124 may be linked to the rotation of the leading part 122 using any suitable limiting mechanism (not illustrated). In the latter case, as the leading edge support members 120 are moved so that the leading parts are rotated from position P1 to P2, the trailing parts 124 rotate in an opposite direction from position P1' to P2'.

In this embodiment, the trailing edge portion 114 comprises an annular bracket 115 and a plurality of trailing edge support members 140, each having a leading part 142 and a trailing part 144, and pivotably mounted via a pivoting arrangement 145 to the bracket 115. The trailing edge support members 140 are arranged circumferentially around the trailing edge portion 112, typically disposed uniformly thereon, and extend therefrom in a generally radial and trailing direction T. In particular the leading part 142 is pivotably mounted to the bracket 115 by means of pivot arrangement 145 that enables said trailing edge support members 140 to rotate along a radial plane with respect to said central support member 110 at least between a first, relatively forward deployed position P3 and a second, relatively rearward stowed position P4.

An aerodynamic drag-generating arrangement in the form of a first drogue canopy 150, typically annular, is connected via an outer rim 152 and an inner rim 154 thereof to the trailing edge portion 114 of said central support structure 100 and the trailing part 124 of the leading edge support members 120, respectively. In particular, the inner rim 154 of the canopy 150 is connected to the trailing edge support members 140, at or near a trailing edge 148 thereof.

In some particular applications of the drogue, notably for use with an in-flight refueling system, the inner rim **154** is advantageously connected to the trailing edge part **144** of the trailing edge support members **140,** but displaced away from the trailing edge **148** itself. In such applications, the projecting part **147** of the trailing edge part **144** trailing away from the inner rim **154** helps to protect the canopy **150** from fouling with the refueling probe of the refueling aircraft when in close proximity thereto, and particularly when executing the engagement or disengagement maneuvers with respect to the tanker aircraft.

The canopy **150** comprises a drag-inducing projected area **A** extending along a plane orthogonal to the longitudinal axis **10** of the drogue **100** and defmed between the position on the trailing portion **114** to which the inner rim **154** is connected and the trailing part **124** of said leading edge support members **120**. The projected area **A** is incrementally adjustable between a first projected area **A1** and a second projected area **A2** by corresponding movement of the leading edge members **120** between the aforesaid first position **P1** and second position **P2**. Thus, when the inner rim **154** is kept at a substantially constant radius from axis **10,** any particular radial position of the outer rim **152,** which is in turn defined by the position of the leading edge support members **120** about pivot **125,** and of the relative angular position between the leading part **122** and the trailing part **124,** will define a corresponding projected area **A** of the canopy **150**. Herein, the areas **A1** and **A2** may refer to the maximum and minimum projected areas of the canopy **150** when deployed, or alternatively, may refer to two intermediate areas of choice, wherein for convenience, **A2** is defined as being larger than **A1**.

The drogue **100** further comprises control members **170** for controlling and adjusting the projected area **A**. The control members **170** comprise an aerodynamic surface arrangement connected to said leading edge members **120** and configured for generating a control or actuating force $F_C$. By aerodynamic surface arrangement is meant any suitable arrangement which generates an airflow dynamic pressure related force as a result of an interaction between an airflow and the surface. The actuating force $F_C$ has at least a radial force component typically directed towards the axis **10,** transmittable to said leading edge members **120** to effect reversible movement thereof with respect to said central support structure between the first position **P1** and the second position **P2**. The actuating force $F_C$ is aerodynamically generated by the aerodynamic control members **170** and is thus depends on the dynamic pressure **q** of the airflow, which is related to the velocity **v** of the airflow and altitude by the expression:-

$$q = \tfrac{1}{2}\, \rho v^2$$

wherein $\rho$ is the air density, which is a function of altitude.
Thus, the greater the velocity **v** of the airflow, and/or the lower the altitude, the greater the force $F_C$ generated by the aerodynamic control members **170** and transmitted to the leading edge members **120** to move the trailing parts **124** of the latter towards the axis **10,** and vice versa. Concurrently, the outer rim **154** is correspondingly displaced radially towards the axis **10,** thus reducing the projected area **A** of the canopy **150**. By appropriately designing the aerodynamic control members **170,** the generated force $F_C$ is such as to maintain the drag generated by the canopy **150** between desired limits, typically substantially constant, for a range of airspeeds and altitudes. Optionally, these limits may be any one of about $\pm 5\%$, $\pm 10\%$, $\pm 15\%$, $\pm 20\%$, $\pm 25\%$, $\pm 30\%$, $\pm 50\%$, $\pm 75\%$, $\pm 100\%$, or any percentage therebetween, or even greater than $+100\%$ of a baseline nominal drag. Such a baseline nominal drag may be defined as the drag of the drogue **100** when in the minimal drag position exemplified by position $P_2$', or a drag value that generates a forces in the drogue **100** that is a particular percentage of the structural limits of one or more components of the drogue **100** or of components connected thereto, for example a fuel line.

Thus, a change in altitude and/or airspeed of the drogue changes the actuation force $F_C$ generated by the aerodynamic control members **170,** which serves to modify the projected area **A** such that the drag produced by the drogue is essentially unchanged, or at least between an upper and a lower limit, as desired or required according to pre-established criteria.

Preferably, the design of the control members **170** is such that a change in **q** provides a force $F_C$ that after displacing the leading edge members **120** appropriately, is balanced naturally by the new forces generated by the changes in the geometry of the leading edge members **120** and of the canopy **150**.

The aerodynamic control members **170** may optionally further comprise a suitable force balancing arrangement for providing a balancing force to the actuation force $F_C$ so that at any particular value of $F_C$ the aerodynamic control members **170** move by a discrete distance, and therefore serve to adjust the projected area **A** by a discrete amount. The force balancing arrangement provides a balancing force that increases as the displacement of the aerodynamic control members **170** increases in the direction of the actuating force $F_C$. For example, suitably designed springs connected between the leading part **122** and the cylinder **110,** or between the leading part **122** and the trailing part **124** of the leading edge support members provide an extension-related force, and may thus be used to balance the aerodynamic control members **170** for a range of forces $F_C$.

Thus, the aerodynamic control members **170** act effectively as a passive drag adjustment mechanism, and a suitable actuating force $F_C$ is automatically aerodynamically generated in response to a change of airflow dynamic pressure with respect to said drogue which balances out the radial opening forces of the canopy **150** at a different equilibrium projected area **A**.

As illustrated in Fig. 1, the aerodynamic control members **170** may be in the form of a plurality of aerodynamic lifting surfaces such as aerofoils, each having a profile and attached to the corresponding leading edge support member such as to provide the required actuating force. Optionally, the plurality of aerodynamic lifting surfaces may be fixed geometry or alternatively of variable geometry, thereby altering its characteristics according to the flight regime. Alternatively, the aerodynamic control members **170** may be in the form of a continuous annular-shaped aerodynamic body, having a flexible or variable geometry capable of operating as required with respect to the drogue **100**.

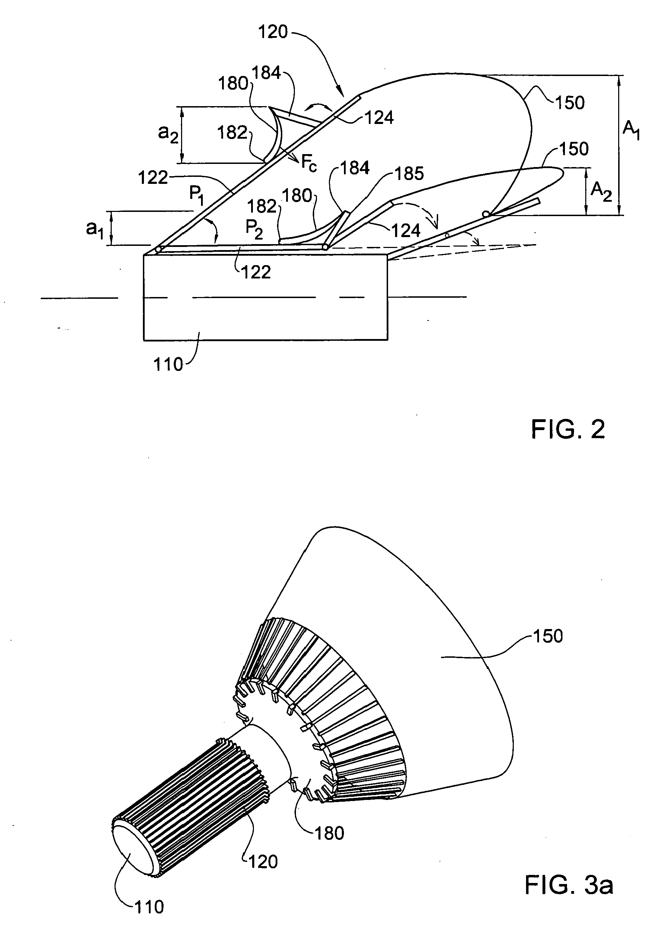

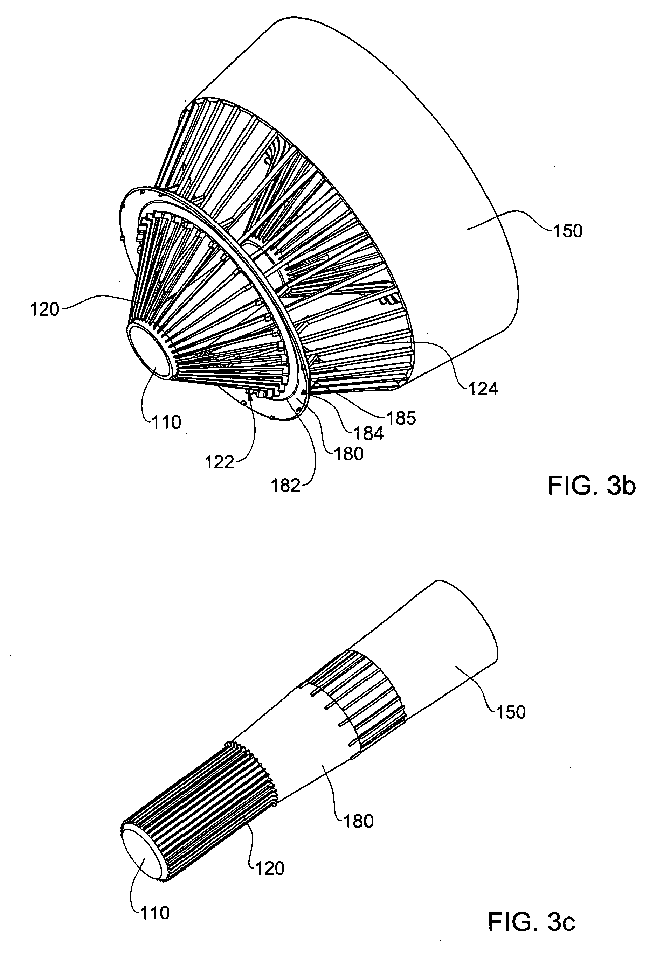

Alternatively, in a variation of the first embodiment, illustrated in Figs. **2** to **3**(c), the aerodynamic control members are in the form of a continuous annular second canopy **180,** which is connected at an inner rim **182** thereof to the leading part **122,** and at an outer rim **184** thereof to an auxiliary support member **185** pivotably connected to the trailing part **124**. The canopy **180** may be made from fabrics or the like, and may be porous, semi-porous, non-porous, or be net-like, and in any case capable of operating as required with respect to the drogue **100**.

Alternatively, in another variation of the first embodiment, not illustrated, the aerodynamic control members may be in the form of a plurality of discrete plates each being connected to a corresponding one of the leading edge members **120**.

The drag force $F_D$ generated by the drogue canopy is related to the airflow dynamic pressure **q** and canopy area by the general expression:-

$$F_D = C_D * A * q$$

wherein $C_D$ is the drag coefficient of the drogue.

As the airflow velocity increases and/or the altitude decreases, **q** increases; this in turn increases actuation force $F_C$ which acts to reduce the area A, such that the drag $F_D$ is maintained within specified limits. In one advantageous application, the drag $F_D$ is maintained substantially constant, and thus, any changes in **q** are compensated by a corresponding change in **A** in inverted proportional relationship, and the aerodynamic control members **170** are designed to produce the appropriate actuation force $F_C$ to produce this change in area. Conversely, as the airflow velocity decreases or the altitude increases, **q** decreases; this in turn decreases actuation force $F_C$ which returns to a new equilibrium position increasing the area **A**, and thus maintaining the drag $F_D$ within specified limits.

In another variation of this embodiment, the said leading edge members **120** are not pivoted at **127,** but may be substantially rigid members which are rotated via pivot **125** according to the force $F_C$ generated by the aerodynamic control members **170,** such as to change the area **A** correspondingly. Optionally, the said leading edge members **120** are not pivoted at **125** either, but rather rigidly connected at the leading edges thereof to the central support structure, and are semi-rigid or resilient members which are radially deformed, typically elastically, according to the force $F_C$ generated by the aerodynamic control members **170,** such as to change the area **A** correspondingly.

In other variations of the first embodiment, the aerodynamic control members **170** may be configured for providing an actuating force $F_C$ that has a force component that is directed radially away from, rather than towards, axis **10**. At the same time, the canopy **150** is configured to generate less drag as the leading edge members **120** are displaced and/or rotated in a direction away from the central support structure.

Additionally or alternatively, in other variations of this embodiment, the trailing edge support members **140** may be replaced with a frustoconical cone arrangement (which may optionally be perforated) tapering outwardly in a trailing direction away from bracket **115**. Such an arrangement may be advantageous where it is not required to stow the drogue while in a minimum area configuration. Similarly, the cone may be replaced with a cylindrical extension of the cylinder **110** in a trailing direction. Alternatively, the canopy **150** may be directly mounted to the trailing edge portion **114.**

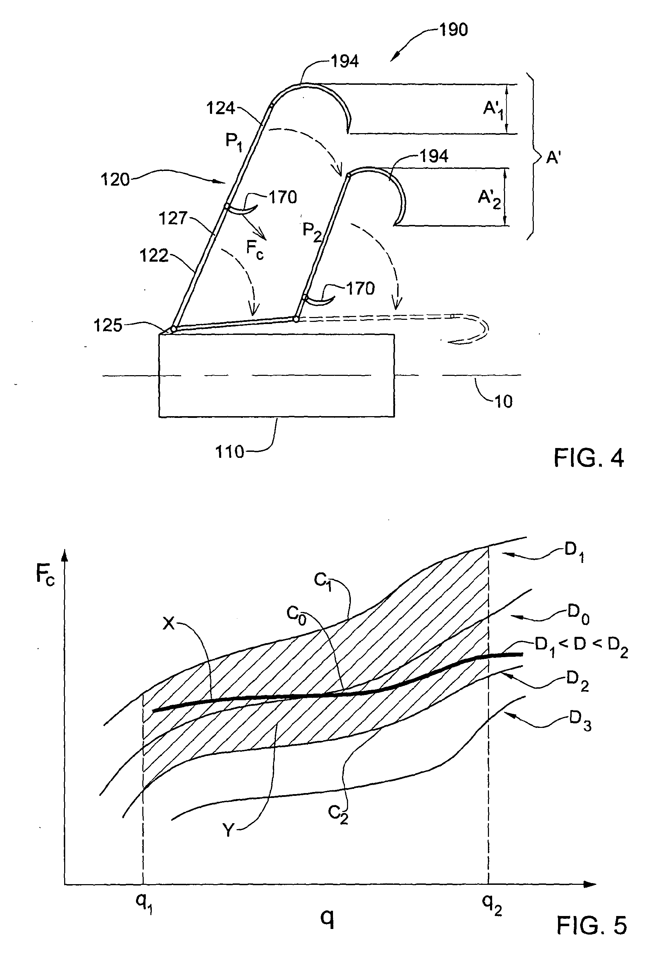

Additionally or alternatively, in other variations of this embodiment, the canopy **150** may be replaced with any other suitable drag-generating arrangement **190,** wherein the aerodynamic drag generated by said aerodynamic drag-generating arrangement is a function of said projected area. For example, and referring to Fig. **4,** the canopy may be replaced with solid winglets **194** comprised at the trailing parts **124** of the leading edge support members. The winglets **194** generate aerodynamic lifting forces, which enable the drag-generating arrangement **190** to open from a stowed position when originally deployed, and which provide an axial drag force which varies according to the airflow dynamic pressure **q** and the effective area **A'** of the winglets. Thus, when the leading edge support members **120** are in position **P**, the winglets have an effective projected area **A1'**, and when in position **P2,** the winglets have a smaller effective area, **A2'**. **In** this variation of the first embodiment, there is no need to connect the drag-generating arrangement **190** to the trailing portion **114** of the central support structure **110,** and thus do not require any trailing edge support members either.

In one non-limiting application, the said drogue **100** is used with an in-flight refueling system. In such an application, the leading portion **112** of the central support structure is connected to a fuel hose or line that is connected at the other end thereof to a suitable tank in the tanker aircraft, and that can be extended or retracted during flight for refueling other aircraft. The trailing portion **114** comprises a fuel valve and a refueling coupling member and is thus suitably configured for connection, typically frictional fit, with the refueling probe of an aircraft, the longitudinal axis of the probe being co-axial with axis **10** when the probe is connected to the structure **110.** When refueling operations are complete, the fuel line is reeled into the tanker aircraft fuselage, or a refueling pod, and the trailing edge support members **140** are displaced to position **P4** in order to minimize the cross-sectional area of the drogue, whereupon it is stowed in a suitable housing within the fuselage or pod.

The specific design and operating characteristics, including the aerodynamic characteristics of the aerodynamic control members **170** will generally depend on the geometry and aerodynamic characteristics of the other components of the drogue **100.** According to the invention, the operating characteristics of the aerodynamic control members **170** are designed to provide actuation forces $F_C$ that maintain the overall drag of the drogue **100** within predetermined limits with respect to a datum drag. These limits may include an upper limit and/or a lower limit, which is/are usually defined by structural limits of the drogue **100** itself or other components connected thereto.

Referring to Fig. 5, the characteristics required for a suitable aerodynamic control members **170** may be determined as follows. First, a working model of the drogue **100** of the required geometry for a particular application is actually constructed, or a model thereof is constructed, or a virtual or mathematical model thereof is created, having all the features and operating characteristics as described herein, except that no control members **170** are included therein. The working model, which again may be real or virtual, is subjected to wind tunnel or virtual tests, as appropriate, in which the force $F_C$, required for maintaining the drag on the working model constant is determined for a range of airflow dynamic pressure **q.** This may be repeated for a plurality of constant drag values $D_1, D_2, D_3$ and so on, on either side of baseline drag value $D_0$, providing a series of corresponding constant-drag curves or characteristics $C_1, C_2, C_3$ and $C_0$, respectively. Assuming that $D_1 > D_0 > D_2$, and that it is required for the drag to be maintained within a drag envelope Y, defined between upper threshold $D_1$ and lower threshold $D_2$, and between a lower and upper dynamic pressure limits, $q_1$ and $q_2$, respectively, then the design of the aerodynamic control members **170** must be such that the aerodynamic force $F_C$ generated by the aerodynamic control members **170** as a function of **q** must be within the envelope **Y** in Fig. 5, enclosed by the limits or thresholds defined by the characteristics $C_1$ and $C_2$, and $q_1$ and $q_2$. Then, the $F_C$ **vs q** characteristic **X** of any one of a number of different forms for the aerodynamic control members **170** (in isolation) can be determined or obtained, in any suitable manner, including full-scale or model tests, or virtual simulations, and compared with the characteristics $C_1$ and $C_2$ so that at least one design providing a suitable match therewith may be chosen. It should be noted that even if the form of the $F_C$ **vs q** characteristic of the aerodynamic control members **170** is different from that of or, so long as is within the limits of the curves $C_1$ and $C_2$ for the range $q_1$ to $q_2$, the drag generated by the drogue **100** will be within the prescribed limits between $D_1$ and $D_2$.

Optionally, the aerodynamic $F_c$ **vs q** characteristic required for the aerodynamic control members **170** may be modified by introducing a force producing balancing means, for example as described above, such as to at least partially balance the force $F_C$. However, the aerodynamic $F_C$ **vs q** characteristic thus modified must still lie within the limits $C_1$ and $C_2$.

Optionally, and preferably, the design of the aerodynamic control members **170** can be fine-tuned to compensate for the interactions that may occur between the aerodynamic control members **170** and the drogue **100.**

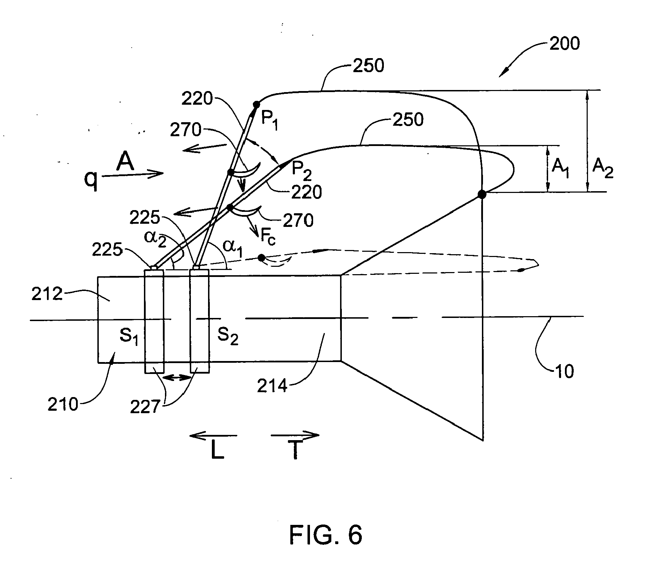

A second embodiment of the invention, illustrated in Fig. **6,** comprises all the features and elements of the first embodiment and variations thereof as described above, *mutatis mutandis,* with the following differences.

In the second embodiment, the drogue **200** also comprises a central support structure **210** having a leading portion **212** and a trailing portion **214,** with a plurality of leading edge support elements **220,** which in this embodiment are not articulated, but rather are pivotably connected at the leading edges portion thereof via a pivot arrangement **225** to a sleeve **227,** which is axially reciprocably displaceable between a forward position **S1** and a rearwards position **S2,** enabling the leading edge support members to assume the corresponding positions **P1** and **P2,** respectively. At **P1** the leading edge support members **220** are at an angle $\alpha 1$ to the axis **10,** and the drag-generating arrangement, in the illustrated embodiment a canopy **250,** has a projected area **A1,** while at position **P2,** the leading edge support members are at a greater angle **2** to the axis **10,** the canopy **250** having projected area **A2.** The drogue **200** further comprises aerodynamic control members **270** for controlling and adjusting the projected area **A,** and operate in a similar manner to those described for the first embodiment, mutatis mutandis, with the main differences as follows. When the actuating force $F_C$ is increased due to an increase in airflow dynamic pressure, this force causes a forward translation of the sleeve **227** in the leading direction **L** and a reduction in the angle between the leading edge support members **220** and the central support structure **210,** reducing the projected area of the canopy **250** accordingly. Conversely, when the actuating force $F_C$ is decreased due to a decrease in airflow dynamic pressure, this force causes a rearward translation of the sleeve **227** in the trailing direction **T** and an increase in the angle $\alpha$ between the leading edge support members **220** and the central support structure **210,** increasing the projected area of the canopy **250** accordingly. Thus, the drag produced by the drogue **200** can be passively controlled to remain within prescribed limits, for example substantially constant, for a range of airspeeds and altitudes.

As with the first embodiment, aerodynamic control members **270** may optionally further comprise a suitable force balancing arrangement for providing a balancing force to the actuation force **F$_C$** , *mutatis mutandis.*

Optionally, a suitable mechanism may be provided for ensuring that the sleeve **227** slides as required when acted upon by the aerodynamic members **270.**

In the method claims that follow, alphanumeric characters and Roman numerals that may be used to designate claim steps are provided for convenience only and do not imply any particular order of performing the steps.

It should be noted that the word "comprising" as used throughout the appended claims is to be interpreted to mean "including but not limited to".

While there has been shown and disclosed exemplary embodiments in accordance with the invention, it will be appreciated that many changes may be made therein without departing from the spirit of the invention.

**Claims**

1. A drogue comprising a projected area associated with an aerodynamic drag-generating arrangement of the drogue, wherein a drag generated by said drogue is a function of said projected area, the drogue further comprising means for controlling the drag generated by the drogue with respect to changes in airflow dynamic pressure by adjusting said projected area, wherein said means comprise control members for driving said adjustment, said control members being configured for providing a driving force for driving said adjustment that is generated by and related to the airflow dynamic pressure.

2. A drogue according to claim 1, comprising a central support structure configured for connection to an external structure and having a leading edge portion and a trailing edge portion; a plurality of leading edge support members, each having a leading part and a trailing part, said leading part being mounted to said leading edge portion of the central support structure to enable at least said trailing part of said leading edge support members to move with respect to said central support member at least between a first position and a second position; an aerodynamic drag-generating arrangement connected at least to said trailing part of said leading edge support members, said aerodynamic drag-generating arrangement comprising an associated projected area that is adjustable by movement of said trailing part of said leading edge members between said first and second positions, wherein a drag generated by said aerodynamic drag-generating arrangement is a function of a position of said trailing part of said leading edge support members with respect to said central support structure;

and further comprising control members for adjusting said projected area, said control members comprising an aerodynamic surface arrangement connected to said leading edge members and configured for generating an airflow dynamic pressure-related force transmittable to said leading edge support members to effect movement of at least said trailing part of said leading edge support members with respect to said central support structure to a position between said first and second positions in response to a change of airflow dynamic pressure with respect to said drogue such as to enable said aerodynamic drag-generating arrangement to generate a corresponding drag force for the drogue.

3. A drogue according to claim 1 or claim 2, wherein said control members are configured to generate a said airflow dynamic pressure related force to said leading edge members at any airflow dynamic pressure between a range of operating airflow dynamic pressures such as to generate a said corresponding drag force that is below an upper predetermined threshold value.

4. A drogue according to claim 3, wherein said upper predetermined threshold value is any one of about 0%, 5%, 10%, 15%, 20%, 25%, 30%, 35%, 40%, 50%, 60%, 70%, 80%, 90%, 100% above a nominal drag value.

5. A drogue according to any one of claims 2 to 4, wherein said control members are configured to generate a said airflow dynamic pressure related force to said leading edge members at any airflow dynamic pressure between a range of operating airflow dynamic pressures such as to generate a said corresponding drag force that is above a lower predetermined threshold value.

6. A drogue according to claim 5, wherein said lower predetermined threshold value is any one of about 0%, 5%, 10%, 15%, 20%, 25%, 30%, 35%, 40%, 50%, below a nominal drag value.

7. A drogue according to any one of claims 1 to 6, wherein said aerodynamic control members are configured to generate a said airflow dynamic pressure related force to said leading edge members at any airflow dynamic pressure between a range of operating airflow dynamic pressures such as to maintain approximately constant a drag force generated by said drogue.

8. A drogue according to claim 2 to 7, wherein said trailing part is displaced radially with respect to said central support structure when moving between said first position and said second position.

9. A drogue according to claim 8, wherein said leading edge support members are pivotably connected to said central support member via said leading parts.

10. A drogue according to any one of claims 8 or 9, wherein said leading edge support members are articulated, comprising a pivot intermediate between said leading part and said trailing part, and wherein said control members are mounted on said trailing part.

11. A drogue according to claim 8, wherein said leading edge support members are slidingly connected to said central support member via said leading parts for axial translation between said leading parts and central support member.

12. A drogue according to any one of claims 2 to 11, wherein said trailing edge portion of said central support structure comprises a plurality of trailing edge support members pivotably mounted to an intermediate portion of the central support structure.

13. A drogue according to claim any one of claims 2 to 12, wherein said trailing edge portion of said central support structure comprises a frustoconical structure.

14. A drogue according to any one of claims 2 to 13, wherein said aerodynamic drag-generating arrangement comprises any one of:

- a drogue canopy mounted between said trailing parts of said leading edge support members and said trailing edge portion of said central support structure;
- a plurality of drag inducing elements, including winglets.

15. A drogue according to any one of claims 2 to 13, wherein said control members comprise a second drogue canopy.

16. A drogue according to any one of claims 2 to 15, wherein said control members comprise aerodynamic lifting surfaces such as aerofoils.

17. A drogue according to any one of claims 2 to 16, wherein said drag-generating arrangement is connected via an inner perimeter thereof to the trailing portion of said central support structure.

18. A drogue according to any one of claims 1 to 18, wherein said drogue is configured as a refueling drogue for rearward deployment from a tanker aircraft into an air stream.

19. A drogue according to claim 18, further comprising:

a fuel valve for receiving fuel from the tanker aircraft and for controlling a flow of the fuel;
a coupling attached to the fuel valve for enabling a refueling probe from a receiving aircraft to reversibly connect to the fuel valve such as to enable fuel to be conveyed to said probe.

20. An in flight refueling system comprising:

a fuel supply;
a fuel line having a leading end and a trailing end, and being in fluid communication with the fuel supply;
a refueling coupling means for receiving a refueling probe and mounted at the trailing end of the fuel line; and
a drogue mounted at said trailing end, said drogue being defined by any one of claims 1 to 19.

21. A method for operating a drogue comprising controlling the drag generated by the drogue with respect to changes in airflow dynamic pressure by adjusting a projected area associated with an aerodynamic drag-generating arrangement of the drogue, wherein the drag generated by said drogue is a function of said projected area, and wherein said adjustment is driven by control members configured for providing a driving force for driving said adjustment that is generated by and related to the airflow dynamic pressure.

22. A method according to claim 21, wherein said airflow dynamic pressure-related driving force is such as to adjust the said projected area to generate a drag that is approximately constant for an operating range of airflow dynamic pressures.

23. A method according to any one of claims 21 to 22, wherein said control members are configured to generate a said airflow dynamic pressure related force at any airflow dynamic pressure between a range of operating airflow dynamic pressures such as to generate a said corresponding drag force that is below an upper predetermined threshold value.

24. A method according to claim 23, wherein said upper predetermined threshold value is any one of about 0%, 5%, 10%, 15%, 20%, 25%, 30%, 35%, 40%, 50%, 60%, 70%, 80%, 90%, 100% above a nominal drag value.

25. A method according to any one of claims 21, 23, 24, wherein said control members are configured to generate a said airflow dynamic pressure related force at any airflow dynamic pressure between a range of operating airflow dynamic pressures such as to generate a said corresponding drag force that is above a lower predetermined threshold value.

26. A method according to claim 25, wherein said lower predetermined threshold value is any one of about 0%, 5%, 10%, 15%, 20%, 25%, 30%, 35%, 40%, 50%, below a nominal drag value.

FIG. 1

FIG. 2

FIG. 3a

FIG. 3b

FIG. 3c

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6824105 B
- US 6464173 B
- US 6375123 B
- US 5921294 A
- US 6145788 A
- US 5871173 A
- US 5255877 A
- US 5427333 A
- US 6588465 B
- US 4927099 A